# EUROPÄISCHE PATENTSCHRIFT

(11) **EP 3 626 531 B1**
(45) Veröffentlichungstag und Bekanntmachung des Hinweises auf die Patenterteilung: **29.12.2021**
(21) Anmeldenummer: 19166994.4
(22) Anmeldetag: 03.04.2019
(51) Int. Cl.: B60P 3/00, B60D 1/155, G06Q 10/08

(54) **MOBILE ABHOLSTATION FÜR INNENSTADTLOGISTIK**
MOBILE PICK-UP STATION FOR INNER CITY LOGISTICS
STATION DE RETRAIT MOBILE POUR LA LOGISTIQUE DE CENTRE-VILLE

(30) Priorität: 21.09.2018 DE 102018123347
(43) Veröffentlichungstag der Anmeldung: 25.03.2020
(73) Patentinhaber: VKF Renzel GmbH, 46419 Isselburg (DE)
(72) Erfinder: Renzel, Heinz, 46399 Bocholt (DE)
(74) Vertreter: Habbel, Ludwig

(56) Entgegenhaltungen:
- EP-A1- 1 155 913
- WO-A1-2018/046603
- DE-U1- 9 003 070
- DE-U1-202006 003 054
- DE-U1-202009 011 491
- FR-A1- 2 902 721
- GB-A- 2 461 325
- US-B1- 9 256 852

## Beschreibung

Die Erfindung betrifft eine mobile Abholstation nach dem Oberbegriff des Anspruchs 1.

Aus der DE 20 2006 003 054 U1 ist eine solche mobile Abholstation bekannt. Diese weist eine Schrankanlage als Teil eines Fahrzeuganhängers auf, welcher zur Versorgung von ländlichen Bereichen und Dörfern mit Nahrungsmitteln, Zeitungen, Tabakwaren und anderen Produkten dienen soll.

Aus der DE 20 2009 011 491 U1 ist ein Fahrgestell für Anhänger bekannt, insbesondere für Wohnwagen oder Verkaufswagen, bei welchem ein Deichselkopf aus- und einziehbar ist, also zwischen einer Fahrstellung und einer Ruhestellung beweglich ist.

Aus der GB 2 461 325 A ist ein als Wohnwagen ausgestalteter Fahrzeuganhänger bekannt, dessen Gehäuse vom Fahrgestell des Anhängers getrennt werden kann und dann gegenüber dem Untergrund höhenbeweglich ist.

Aus der EP 1 155 913 A1 ist ein Fahrzeuganhänger mit einer Schrankanlage bekannt, der an seinen beiden Längsseiten außen Schrankfächer aufweist und dazwischen in seinem Inneren einen Gang, von dem aus die Schrankfächer bestückt werden können.

Aus der WO 2018/046603 A1 ist ein Fahrzeuganhänger bekannt, der eine Schrankanlage aufweist, wobei die einzelnen Schrankfächer elektronisch codierte bare Schlösser aufweisen.

Aus der FR 2 902 721 A1 ist ein Fahrzeuganhänger bekannt, dessen Gehäuse ohne einen Boden ausgestaltet ist, auf den Untergrund abgesenkt werden kann und eine oder mehrere Türen aufweist, die bündig mit dem Boden abschließen. Um den Anhänger bewegen zu können, sind Verstärkungsstäbe innerhalb und unterhalb der Türen angebracht. Wenn der Fahrzeuganhänger nicht bewegt wird, sondern an seinem Standort aufgestellt wird, sind die Räder und die Kupplung des Fahrzeuganhängers entweder einziehbar oder abnehmbar.

Aus der US 9 256 852 B1 ist eine mobile Abholstation bekannt. Diese weist eine Schrankanlage als Teil eines Fahrzeugs auf, welches zu den verschiedenen Empfängern fährt. Das Fahrzeug kann autonom fahrend ausgestaltet sein. Die Besonderheit bei der bekannten Abholstation besteht darin, dass von einer vorgegebenen Fahrtroute, die das Fahrzeug zu einem oder mehreren Empfängern führt, abgewichen werden kann, wenn einer der Empfänger seine Position mit Hilfe eines Mobilgerätes wie z. B. eines Smartphones an das Fahrzeug der mobilen Abholstation übermittelt. In diesem Fall kann nämlich eine Neuberechnung der Route erfolgen und das Fahrzeug zu dem jeweiligen Aufenthaltsort des Empfängers gelenkt werden.

Aus der DE 90 03 070 U1 ist eine verfahrbare Telefonsprechstelle bekannt. Diese weist einen mit Sprechzellen versehenen Innenraum eines Fahrzeugs auf, wobei die Fahrzeugdeichsel klapp- und versenkbar ist.

Als Kleinsendungen werden im Rahmen des vorliegenden Vorschlags Sendungen bezeichnet, die bestimmte Abmessungen und ein bestimmtes Gewicht nicht überschreiten, wie z. B. Pakete, Päckchen, Briefe und dergleichen. Die überwiegende Anzahl von Kleinsendungen wird an private Empfänger geliefert, so dass die Zustellung der Kleinsendungen insbesondere im innenstädtischen Bereich erfolgt, wo - beispielsweise im Gegensatz zu Gewerbegebieten - die Verkehrs- und Parkplatzflächen besonders stark ausgelastet sind. Im Bereich der Innenstadtlogistik hat es sich aufgrund der großen Anzahl von Kleinsendungen als problematisch herausgestellt, dass die dafür verwendeten Zustellfahrzeuge auf den überfüllten Verkehrswegen der Innenstädte ein Hindernis für den Verkehrsfluss darstellen, z. B. durch Parken in der zweiten Reihe, also auf der Straße, mangels verfügbarer freier Parkplätze. An dieser Problematik ändert die bekannte mobile Abholstation nur wenig, da sie genauso wie die bislang üblichen Zustellfahrzeuge zu den verschiedenen Empfängern bewegt wird.

Der Erfindung liegt die Aufgabe zugrunde, eine gattungsgemäße Abholstation dahingehend zu verbessern, dass diese möglichst wirtschaftlich ausgestaltet werden kann und eine Verkehrsentlastung der Innenstädte ermöglichen kann.

Diese Aufgabe wird durch eine mobile Abholstation mit den Merkmalen des Anspruchs 1 gelöst. Ein vorteilhaftes Verfahren zur Übergabe von Briefen, Paketen und ähnlichen Kleinsendungen unter Verwendung einer derartigen mobilen Abholstation ist im Anspruch 8 beschrieben. Vorteilhafte Ausgestaltungen sind in den Unteransprüchen beschrieben.

Die Erfindung schlägt mit anderen Worten vor, in an sich bekannter Weise die Schrankanlage, die als Teil eines Fahrzeugs ausgestaltet ist, nicht bei einem selbstfahrenden Fahrzeug vorzusehen, sei es autonom oder mit einem Fahrer beweglich, sondern vielmehr das Fahrzeug als Anhänger auszugestalten. Da auf die komplette Antriebstechnik einschließlich der Technik zur Energieversorgung des Antriebs verzichtet werden kann, kann die vorschlagsgemäße Abholstation erheblich preisgünstiger ausgestaltet werden als eine selbstfahrende Abholstation.

Dabei geht der vorliegende Vorschlag von der Überlegung aus, dass die mobile Abholstation vorzugsweise nicht zu den verschiedenen Empfängern verfahren wird, sondern vielmehr an einen so genannten Aufstellungsort verfahren wird, den die Empfänger dann jeweils aufsuchen und dort ihre Kleinsendungen aus der Abholstation entnehmen können. Auf diese Weise können erstens die Fahrtrouten kürzer gehalten werden und insbesondere wird die Zeitdauer erheblich verkürzt, während welcher die mobile Abholstation mittels eines Zugfahrzeugs im Bereich der Innenstadt bewegt werden muss, verglichen mit der Fahrtdauer eines Zustellfahrzeugs, welches die verschiedenen Kleinsendungen zu den jeweiligen Empfängern bringt.

Insbesondere wenn vorschlagsgemäß das als Anhänger ausgestaltete Fahrzeug über eine lange Zeit, beispielsweise 12 oder 14 Stunden tagsüber, ortsfest an einem Aufstellungsort verbleibt, wird ein erheblicher wirtschaftlicher Vorteil erzielt im Vergleich zur Ausgestaltung der Abholstation als selbstfahrendes Fahrzeug, denn während dieser Standzeiten würde die gesamte Antriebstechnik des selbstfahrenden Fahrzeugs ungenutzt bleiben. Durch die vorschlagsgemäße Ausgestaltung der Abholstation als Anhänger hingegen kann ein Zugfahrzeug, welches diesen Anhänger zu seinem Aufstellungsort verbracht hat, anschließend weiter genutzt werden, um entweder andere Abholstationen zu anderen Aufstellungsorten zu bringen, oder um anderweitig als Zugfahrzeug genutzt zu werden.

Erfindungsgemäß ist weiterhin vorgesehen, dass der Fahrzeuganhänger eine Deichsel aufweist, die dazu dient, den Anhänger an ein Zugfahrzeug anzukoppeln. Diese Deichsel kann aus einer im Wesentlichen liegenden Fahrstellung in eine Ruhestellung verschwenkt werden. In der Fahrstellung erstreckt sich die Deichsel von der Schrankanlage des Anhängers weg nach außen, nämlich zur Kupplung des Zugfahrzeugs hin. In der Ruhestellung hingegen ist die Deichsel eingeklappt, ragt also weniger weit von der Schrankanlage nach außen vor. Auf diese Weise erfordert die vorschlagsgemäße Abholstation weniger Platz als ein selbstfahrendes Fahrzeug, da beispielsweise eine Fahrerkabine nicht vorhanden ist und dementsprechend am Aufstellungsort kein Platzbedarf für eine solche Fahrerkabine besteht. Der Anhänger kann beispielsweise nahe an eine Verkehrsfläche angrenzend aufgestellt werden, beispielsweise einem Fußweg, einem Fahrradweg, oder einer Laufzone auf einem öffentlichen Platz benachbart, wobei sich das Zugfahrzeug beim Aufstellen des Anhängers zunächst kurzfristig auf dieser erwähnten Verkehrsfläche befinden kann. Nachdem das Zugfahrzeug jedoch entfernt worden ist und die Deichsel in ihre Ruhestellung bewegt worden ist, steht der Anhänger an seinem Aufstellungsort, ohne die Verkehrsfläche zu beeinträchtigen. Dies gilt insbesondere, wenn der Anhänger so aufgestellt wird, dass der Zugang zu den Schließfächern nicht über die Verkehrsfläche erfolgt, beispielsweise indem eine Reihe von Schließfächern nicht parallel, sondern rechtwinklig zu der Verkehrsfläche ausgerichtet ist.

Aufgrund dieses geringeren Platzbedarfs kommt eine große Anzahl von möglichen Aufstellungsorten für den Betrieb der mobilen Abholstation in Frage. Dies ist einerseits vorteilhaft, weil für die Empfänger ein möglichst dichtes Netz an Abholstationen kurze Wege bedeutet. Dies erhöht einerseits die Akzeptanz des Logistikkonzepts, die Kleinsendungen mittels mobiler Abholstationen zuzustellen, und stellt weiterhin sicher, dass die Kleinsendungen problemlos, insbesondere ermüdungsfrei, von den Empfängern nach Hause transportiert werden können. Unabhängig davon besteht allerdings die Möglichkeit, dass die Abholungen unterstützt werden können durch Lastenfahrräder oder elektrisch betriebene Kleintransporter. Auch wenn nur kurze Strecken zu überwinden sind, kann eine solche Unterstützung vorteilhaft sein, beispielsweise aufgrund der körperlichen Befindlichkeit der Empfänger, des Gewichts der Pakete, und / oder aufgrund der Abmessungen der Pakete, die auch bei einem vergleichsweise geringen Gewicht die Handhabung der Pakete erschweren können.

Insbesondere wenn das erwähnte möglichst dichte Netz an mobilen Abholstationen verwirklicht wird, geht mit der damit verbundenen größeren Anzahl an mobilen Abholstationen ein erheblicher wirtschaftlicher Vorteil einher, der durch die möglichst preisgünstige Ausgestaltung der mobilen Abholstation verwirklicht wird, nämlich durch den Verzicht auf eine Antriebstechnik und durch die Ausgestaltung der mobilen Abholstation als Fahrzeuganhänger.

Um die Deichsel aus der liegenden Fahrstellung in die Ruhestellung zu verbringen, ist erfindungsgemäß vorgesehen, dass die Deichsel in eine aufrechte Ruhestellung geschwenkt werden kann. Dies unterstützt eine kostengünstige Ausgestaltung des Anhängers, denn die Deichsel ist typischerweise ohnehin um eine liegende Schwenkachse beweglich und weist ein dementsprechendes Schwenklager auf. Außerdem wird hierdurch eine leichte Bedienbarkeit der Deichsel ermöglicht, denn im Vergleich zu einer translatorischen Verschiebung der Deichsel wird bei der rotatorischen Schwenkbewegung eine Gefahr von Verkantungen vermieden. Zudem kann eine leichtgewichtige Bedienung beim Anheben der Deichsel in die Ruhestellung oder auch beim späteren erneuten Absenken in die Fahrstellung dadurch ermöglicht werden, dass die Deichsel beispielsweise aus Leichtmetall aufgebaut ist, oder dass jenseits ihrer Schwenkachse ein Gegengewicht angeordnet ist.

Weiterhin ist erfindungsgemäß vorgesehen, dass die mobile Abholstation ein Staufach aufweist, welches die Deichsel in ihrer Ruhestellung aufnimmt. Beispielsweise kann das Staufach in einer Schrankanlage der mobilen Abholstation angeordnet sein. Als Schrankanlage wird in diesem Zusammenhang ein größeres Gehäuse bezeichnet, in welchem die mehreren Schließfächer angeordnet sind. Dieses Gehäuse kann dementsprechend größer sein, als es ausschließlich für die Schließfächer erforderlich ist, sodass dieses Gehäuse auch das erwähnte Staufach aufweist, in welches die Deichsel aus der liegenden Fahrstellung in die aufrechte Ruhestellung geschwenkt werden kann. Hierdurch wird ein optimaler Verletzungsschutz gewährleistet, wenn sich die mobile Abholstation an ihrem Aufstellungsort befindet, da die Deichsel keinen hinderlichen Vorsprung oder eine zerklüftete äußere Kontur der mobilen Abholstation schafft. Dies gilt insbesondere, wenn das Staufach außen durch eine Tür, ein Rollo o. dgl. geschlossen werden kann.

Zudem kann ein optimaler Witterungsschutz geschaffen werden, sodass das Schwenkgelenk der Deichsel und auch die elektrischen Anschlüsse des Anhängers, die sich an der Deichsel befinden und für den elektrischen Anschluss des Anhängers an das Zugfahrzeug dienen, vor Witterungseinflüssen wie Niederschlägen, Staub und Sand optimal geschützt sind.

Weiterhin ist die Schrankanlage erfindungsgemäß zwischen einer Fahrstellung und einer Zugangsstellung in der Höhe verstellbar. Dabei ist vorgesehen, dass sie in der Zugangsstellung tiefer angeordnet ist als in der Fahrstellung. Diese Höhenbeweglichkeit der Schrankanlage erlaubt einerseits in der Fahrstellung eine problemlose Überfahrbarkeit von Hindernissen, wenn der Anhänger von einem zum anderen Ort verfahren wird. Andererseits ermöglicht die demgegenüber tiefere Anordnung der Schrankanlage in ihrer Zugangsstellung einen erleichterten Zugang zu den Schließfächern, bzw. ermöglicht die Anordnung von einer größeren Anzahl von Etagen von Schließfächern und gewährleistet dennoch, dass auch die oberen Etagen problemlos erreichbar sind.

Bei dem Logistikkonzept, bei welchem die vorschlagsgemäße Abholstation verwendet wird, kann vorteilhaft vorgesehen sein, dass sich die einzelnen Empfänger der Kleinsendungen als sogenannte Teilnehmer des Logistikkonzepts bei einem sogenannten Betreiber des Logistikkonzepts registrieren, also bei einem der an diesem Logistikkonzept beteiligten Logistik-Dienstleister. Nach einer solchen Registrierung kann dem Teilnehmer der Zugangscode mitgeteilt werden, beispielsweise elektronisch mittels einer Nachricht, die der Empfänger auf seinem Smartphone oder einem anderen geeigneten Mobilgerät empfangen kann und die ihm die Entsperrung des Schlosses eines Schließfaches ermöglicht, in welchem sich die für diesen Empfänger vorgesehene Kleinsendung befindet.

Im Rahmen einer solchen Registrierung kann beispielsweise auch vorgesehen sein, dass der Teilnehmer Wünsche äußern kann, Sendungen stets in bestimmten Etagen der Schrankanlage zu erhalten, oder aber stets bestimmte Etagen der Schrankanlage definitiv auszuschließen. Auf diese Weise kann für den jeweiligen Teilnehmer die problemlose Erreichbarkeit des zugeordneten Schließfaches gewährleistet sein, unter Berücksichtigung bzw. in Abhängigkeit der Körpergröße oder eventueller körperlicher Beeinträchtigungen des Teilnehmers.

Erfindungsgemäß ist vorgesehen, dass die Schrankanlage relativ zum Fahrzeugrahmen des Anhängers höhenbeweglich ist. Dies ermöglicht eine preisgünstigere Ausgestaltung des Anhängers und gegebenenfalls auch einen größeren Verstellweg der Schrankanlage als ein höhenverstellbares Fahrwerk.

Die Verstellung kann beispielsweise elektrohydraulisch oder elektropneumatisch erfolgen, wobei in diesen Fällen vorzugsweise jeweils eine mechanische Verriegelung der Schrankanlage in ihrer angehobenen Stellung vorgesehen ist, zum Schutz gegen ein ungewolltes Absenken bei Leckagen der Hydraulik- bzw. Pneumatiksysteme. Der Vorteil einer solchen Ausgestaltung besteht darin, dass ein zentrales Hydraulik- oder Pneumatikorgan verwendet werden kann und problemlos ein Synchronlauf an mehreren Stellen der dort vorgesehenen Hubelemente gewährleistet werden kann. Beispielsweise können vier Hubzylinder vorgesehen sein, um die Schrankanlage gegenüber dem Fahrwerk des Anhängers anzuheben.

Alternativ kann die Verstellung jedoch auch ausschließlich elektrisch erfolgen, beispielsweise über elektromotorisch betriebene Spindeln. Dabei ist eine mechanische Verriegelung in der angehobenen Stellung wegen der Selbsthemmung der Spindeln überflüssig, und Leckagen sind ausgeschlossen.

In einer vorteilhaften Ausgestaltung kann der Anhänger aufweisen einen Aufbau mit einem im Wesentlichen rechteckigen Grundriss aufweisen. Als "im Wesentlichen rechteckig" wird dabei auch ein ovaler Grundriss oder ein sechseckiger Grundriss mit zwei spitzen Stirnseiten bezeichnet. Der "im Wesentlichen" rechteckige Grundriss berücksichtigt vielmehr, dass eine vorgegebene Breite eingehalten wird, die den Transport im öffentlichen Straßenverkehr ermöglicht, und dass im Vergleich zu dieser Breite die Schrankanlage eine größere Länge aufweist, um auf diese Weise eine möglichst große Anzahl von Schließfächern bereitzustellen. Dementsprechend sind auf zwei gegenüberliegenden Längsseiten die Schließfächer angeordnet und von außen zugänglich. Auch die Schlösser der Schließfächer sind von außen zugänglich, so dass die "Teilnehmer" von außen die Schlösser der Schließfächer entsperren und die Schließfächer öffnen können.

Im Inneren des Anhänger-Aufbaus verläuft ein freier Gang zwischen diesen beidseitigen Schließfächern, und die Schließfächer sind auch von diesem Gang aus zugänglich, sodass ein "Betreiber" des Logistikkonzepts die Schließfächer von innen bestücken kann, nämlich von dem erwähnten Gang aus. Der Zugang zu den Schließfächern vom Gang aus muss nicht durch Schlösser gesichert sein, sodass eine möglichst problemlose und zeitsparende Bestückung - oder auch Leerung - der Schließfächer durch den Betreiber erfolgen kann.

Es muss lediglich der Zugang zu dem Gang verschließbar sein, um am Aufstellungsort Unbefugten den Zutritt in den Gang und damit einen Zugriff auf die Schließfächer zu verwehren.

Um einen unbefugten Einblick in die Fächer zu verhindern, können die von außen zugänglichen, sogenannten äußeren Türen der Fächer sowie die Böden, Decken, und Seitenwände der Fächer als geschlossene Flächen ausgestaltet sein. Beispielsweise können diese Flächen jeweils aus einem Holzwerkstoff, aus Kunststoff oder aus Metall bestehen. Die zum Gang hin gerichteten, sogenannten inneren Türen, die eine Beschickung oder Entleerung der Fächer vom Gang aus erlauben, können vorteilhaft ebenfalls als geschlossene Flächen ausgestaltet sein, um ebenfalls einen Einblick in das Innere dieser Fächer von der gegenüberliegenden Seite des Anhängers aus zu verhindern, wenn dort die äußere Tür eines Fachs geöffnet ist. Es kann jedoch als ausreichend angesehen sein, diese inneren Türen lediglich in Form eines Gitters auszugestalten, so dass einerseits eine innere Tür mit möglichst geringem Gewicht geschaffen werden kann und andererseits dennoch ein unbefugter Zugriff von außen, bei geöffneter äußerer Tür, in ein benachbartes Fach verhindert ist.

Um dem Personal im Logistikzentrum zeitsparende Arbeitsabläufe beim Beschicken und Entleeren der Fächer zu ermöglichen, können vorteilhaft mehrere oder sämtliche innere Türen benachbarter Fächer gleichzeitig betätigbar sein. Beispielsweise können mehrere oder sämtliche Fächer auf einer Seite des Ganges durch ein Rollgitter, Rollo oder dergleichen zum Gang hin abgeschlossen sein. Statt einzelne innere Türen öffnen oder schließen zu müssen, kann durch Betätigung dieses Rollgitters, Rollos oder dergleichen eine Vielzahl von inneren Türen gleichzeitig geöffnet oder geschlossen werden.

Die Größe der Fächer kann innerhalb einer Schrankanlage unterschiedlich sein, so dass in Abhängigkeit von der jeweiligen Größe eines Pakets die jeweils optimale Fachgröße genutzt werden kann. Im Vergleich dazu, sämtliche Fächer gleich groß auszugestalten, und zwar in Anpassung an das größte aufzunehmende Paket, kann durch die unterschiedlichen Fachgrößen eine möglichst große Anzahl von Fächern innerhalb einer Schrankanlage verwirklicht und eine möglichst effektive Nutzung des im Anhänger verfügbaren Raums ermöglicht werden.

Abhängig von speziellen Kundenwünschen kann sowohl der Anhänger als auch die Ausgestaltung der Fächer kundenspezifisch angepasst werden. Wenn beispielsweise die Schrankanlage in Gerüstbauweise unter Verwendung von standardisierten Strangpressprofilen aufgebaut wird, können die Abmessungen der einzelnen Fächer auf einfache Weise bestimmt und an Kundenwünsche angepasst werden. Um das Gerüst dann auszufachen und die einzelnen Wand- und Türelemente der Fächer zu schaffen, können standardisierte Halbzeuge wie handelsübliche Platten verwendet werden, die auf die gewünschten Maße zugeschnitten werden.

In einer Stirnseite des im Wesentlichen rechteckigen Aufbaus ist eine Tür angeordnet, durch welche der Gang zugänglich ist, so dass von dieser Stirnseite her die Schrankanlage vom Betreiber betreten werden kann.

In einer Stirnseite ist vorteilhaft eine Halterung für die Deichsel vorgesehen.

Bei dieser Ausgestaltung der mobilen Abholstation kann durch den Zugang vom Gang aus ein Zugriff auf die Schließfächer mittels eines Generalschlüssels erfolgen oder auch völlig schlüssellos, sodass die Schließfächer, sozusagen von der Rückseite her, mit möglichst geringem Aufwand in einem Logistikzentrum mit den Kleinsendungen bestückt oder auch entleert werden können.

Auch bei dieser Ausgestaltung kann die Halterung, die an der einen Stirnseite für die Deichsel vorgesehen ist, als Staufach ausgestaltet sein, welches die Deichsel in ihrer Ruhestellung aufnimmt.

Bei der erwähnten Ausgestaltung der Schrankanlage mit einem im Wesentlichen rechteckigen Grundrisse können an derselben Stirnseite sowohl die Tür als auch die Halterung für die Deichsel vorgesehen sein. Wenn die Abholstation auf ihrem Aufstellungsort abgestellt ist und die Deichsel nicht genutzt wird, sondern in ihre Ruhestellung hochgeschwenkt ist, ist auch kein Zugang in das Innere der Abholstation erforderlich. Die hochgeschwenkte Deichsel verhindert oder erschwert in diesem Fall in Art eines Einbruchsschutzes den Zugang durch die Tür in das Innere der Schrankanlage, und die der Deichsel gegenüberliegende Stirnwand kann der Schrankanlage ein hohes Maß an mechanischer Stabilität verleihen, da sie keine Aussparung in Form einer Tür aufweisen muss.

Vorteilhaft kann jedoch vorgesehen sein, dass die Tür einerseits und die Halterung andererseits an zwei einander gegenüberliegenden Stirnseiten angeordnet sind. In einem Logistikzentrum, wo eine Vielzahl von Anhängern abgestellt werden und mit den Kleinsendungen bestückt werden müssen, kann so vermieden werden, dass die Deichseln in ihrer abgesenkten Fahrstellung verbleiben müssen, um nicht in Art des erwähnten Einbruchsschutzes den Zugang in das Innere der Schrankanlage, nämlich durch die Tür, zu behindern. Die abgesenkten Deichseln vergrößern erstens den Platzbedarf und erschweren auch in ihrer abgesenkten Stellung den Zugang zu der Tür, sodass mit Blick auf die Situation in den Logistikzentren die Verteilung der Deichsel einerseits und der Tür andererseits auf zwei gegenüberliegende Stirnwände vorteilhaft ist.

Vorteilhaft kann dem Anhänger ein Zugfahrzeug zugeordnet sein, welches mittels eines Elektromotors angetrieben ist. Um die mobile Abholstation zum Aufstellungsort zu verbringen, beispielsweise morgens, wenn die Schließfächer mit Kleinsendungen bestückt sind, oder um den Anhänger abends wieder vom Aufstellungsort in ein Logistikzentrum zu verbringen, kann dieser Transport des Anhängers durch Verwendung eines elektrisch angetriebenen Zugfahrzeugs lokal möglichst emissionsarm in den Innenstädten erfolgen. Wenn der Elektromotor beispielsweise durch eine Batterie oder einen Akkumulator mit elektrischer Energie versorgt wird, kann der Betrieb lokal völlig emissionsfrei erfolgen. Wenn der Elektromotor jedoch mittels einer Brennstoffzelle mit elektrischer Energie versorgt wird und die Brennstoffzelle mit Wasserstoff betrieben wird, wird ein emissionsarmer Betrieb des Zugfahrzeugs ermöglicht, da von der Brennstoffzelle Emissionen lediglich in Form von Wasserdampf abgegeben werden.

Vorteilhaft kann ein Schloss eines Schließfaches der mobilen Abholstation als PIN-Code-Schloss ausgestaltet sein. PIN bezeichnet dabei eine persönliche Identifizierungsnummer, sodass das Schloss beispielsweise als mechanisches Zahlenschloss ausgestaltet sein kann. Besonders vorteilhaft jedoch kann das Schloss als elektronisches Schloss mit einem Tastenfeld zur Eingabe des PIN-Codes ausgestaltet sein. Das Tastenfeld kann als mechanische Tastatur ausgestaltet sein oder als ein Touchscreen, der einerseits Symbole anzeigen kann und andererseits berührungssensitiv als Eingabemedium dient, oder das Tastenfeld kann in Form von Sensorfeldern ausgestaltet sein, welche die Tasten ohne mechanischen Hub darstellen.

Der als PIN, also letztlich als "Nummer" bezeichnete Code muss nicht notwendigerweise ausschließlich auf die Verwendung von Ziffern, also ausschließlich auf eine Darstellung als Zahl beschränkt sein. Wenn beispielsweise eine alphanummerische Tastatur und nicht nur ein Ziffernblock zur Eingabe der PIN vorgesehen ist, kann die PIN auch eine beliebige alphanummerische Zeichenfolge sein, und abweichend von alphanummerischen Zeichen kann der Code beliebige grafisch darstellbare Symbole enthalten, beispielsweise Sterne, Emojis und beliebige andere Symbole, die dann dementsprechend auch auf den Eingabemitteln des Schlosses dargestellt sind. Beispielsweise kann eine solche Zeichenfolge grafischer und/oder alphanummerischer Zeichen dem Teilnehmer elektronisch auf sein Mobilgerät übermittelt werden, sodass der gesamte übliche Zeichensatz wie er beispielsweise in Messaenger-Apps verwendet wird, auch für einen solchen Code genutzt werden kann. Insbesondere wenn die Eingabemittel des Schlosses als Touchscreen ausgestaltet sind, können die einzelnen Eingabefelder, also die virtuellen Tasten eines solchen Touchscreens mit von einer zur nächsten Codierung wechselnden Symbolen versehen werden, die mittels des Touchscreens angezeigt werden.

Das elektronische Schloss ermöglicht es, nach jeder Benutzung durch einen Teilnehmer die Codierung der Schlösser zu ändern, um auf diese Weise eine missbräuchliche spätere Öffnung eines Schließfaches zu verhindern, dessen PIN-Code zunächst dem berechtigten Benutzer bekannt geworden ist. Aus Sicherheitsgründen kann bei Verwendung eines solchen elektronischen Schlosses der PIN-Code sogar automatisch gesperrt werden, nachdem das Schließfach geöffnet und wieder geschlossen worden ist, wenn man also davon ausgehen kann, dass die Kleinsendung durch den berechtigten Teilnehmer entnommen worden ist.

Vorteilhaft kann, wenn ein Schloss als elektronisches Schloss ausgestaltet ist, dessen Codierung mittels elektronischer Signale veränderlich sein und diesem Schließfach bzw. Schloss kann eine Funkeinrichtung zugeordnet sein, sodass nicht nur dezentral, nämlich durch einen Rechner der mobilen Abholstation selbst eine Umprogrammierung des Codes möglich ist, sondern sodass auch eine Kommunikation mit einer Zentrale möglich ist. Somit kann entweder eine von der Zentrale ausgelöste Umprogrammierung des elektronischen Schlosses erfolgen, oder es kann im Anschluss an eine dezentrale Umprogrammierung des Schloss-Codes eine Kommunikation mit der Zentrale erfolgen, wo beispielsweise eine Datenbank auf einem Computer läuft und den einzelnen Schließfächern die jeweils gültige Codierung ihrer Schlösser zugeordnet ist, sodass von dieser Zentrale aus die Entsperr-Codes an die jeweiligen Teilnehmer, also die Empfänger der Kleinsendungen, übermittelt werden können.

Diese Übermittlung des Codes eines Schließfaches zur Zentrale bzw. von der Zentrale zum elektronischen Schloss der mobilen Abholstation kann beispielsweise auch genutzt werden, um den Zugangscode eines Schließfaches nicht nur zu sperren oder zu ändern, um eine unbefugte weitere Benutzung des Schließfaches zu verhindern, sondern es kann auch eine Umprogrammierung des Codes, also eine Änderung des Entsperr-Codes des elektronischen Schlosses genutzt werden.

Unabhängig davon, ob eine Umprogrammierung des Codes zentral oder dezentral erfolgt, kann mehrfach nacheinander an demselben Tag das Schließfach am Aufstellungsort der mobilen Abholstation genutzt werden, was die mobile Abholstation besonders vielseitig nutzbar macht und deren Wirtschaftlichkeit verbessert.

Beispielsweise kann vorgesehen sein, dass das Schließfach zunächst im Logistikzentrum mit einer Kleinsendung bestückt wird. Der Code des Schließfaches wird einem Teilnehmer, nämlich dem vorgesehenen Empfänger der Kleinsendung, mitgeteilt. Die mobile Abholstation wird zum Aufstellungsort verbracht und dort aufgestellt. Der Teilnehmer kann sich zum Aufstellungsort begeben, den Code eingeben und so das für ihn vorgesehene Schließfach öffnen und die für ihn vorgesehene Kleinsendung aus dem Schließfach entnehmen. Anschließend wird diesem Schließfach bzw. dessen elektronischem Schloss ein neuer Code zugewiesen. Dies kann entweder durch einen Rechner bzw. aus einer Datenbank erfolgen, die sich dezentral in der mobilen Abholstation selbst befindet, oder diese neue Vergabe des Codes kann von einem Zentralrechner aus erfolgen, der drahtlos mit einer entsprechenden Funkeinrichtung der mobilen Abholstation kommuniziert.

Für die Teilnehmer an dem Logistikkonzept kann vorteilhaft die Möglichkeit bestehen, eine sogenannte Bedarfsanfrage an die Betreiber des Logistikkonzepts zu stellen, also nach einem freien Schließfach zu fragen. Das in dem obigen Beispiel frei gewordene Schließfach kann für eine solche Anfrage genutzt werden, sodass der Betreiber des Logistikkonzepts dieses Schließfach reserviert und dem Teilnehmer eine entsprechende Bestätigungsmitteilung elektronisch übersendet. Zudem kann vorgesehen sein, dass der Betreiber dem Teilnehmer eine Zahlungsinformation übersendet, wenn zu diesem Zeitpunkt die Versandkosten bereits bekannt sind, die sich nach der Lieferadresse, Größe und Gewicht der Kleinsendung und ggf. auch nach Wünschen zur Eilbedürftigkeit der Zustellung bemessen können. Beispielsweise kann die mobile Abholstation Hilfsmittel aufweisen, um die Abmessungen und / oder das Gewicht der Kleinsendung zu erfassen, so dass der Teilnehmer die erforderlichen Informationen im Rahmen seiner Bedarfsanfrage übermitteln kann.

Bei der Zahlungsinformation kann es sich um eine Zahlungsaufforderung handeln, sodass der Teilnehmer nun von sich aus eine Zahlung auslösen muss. Besonders einfach kann ein solches Bezahlverfahren dadurch ausgestaltet sein, dass der Teilnehmer lediglich eine vom Betreiber übermittelte Information bestätigt. Diese Information enthält beispielsweise Angaben über die Höhe der zu leistenden Zahlung, und eine Angabe über ein zu belastendes Guthaben des Teilnehmers. Es kann sich dabei um ein Guthaben bei einem Bezahldienst wie PayPal handeln, oder um ein Guthaben auf einem Konto eines Kreditinstituts, oder um ein Guthaben, welches dem Teilnehmer bei dem Betreiber des Logistikkonzepts gutgeschrieben ist. In einer zweiten Ausgestaltung des Bezahlverfahrens kann es sich bei der elektronisch an den Teilnehmer übermittelten Zahlungsinformation allerdings auch lediglich um eine Information handeln, dass ein Guthaben des Teilnehmers mit einem bestimmten Betrag belastet werden wird oder bereits schon belastet worden ist. In diesem Fall braucht der Teilnehmer nur dann aktiv zu werden, wenn er dieser Information widersprechen will und damit seine Bedarfsanfrage widerrufen will.

Wenn die Bezahlung erfolgt ist, z. B. der erwähnte Widerruf oder ein Abbruch des Verfahrens nicht erfolgt, wird auf die Bedarfsanfrage und die anschließende Bestätigungsmitteilung hin der Entsperr-Code des Schlosses des leeren, für den Teilnehmer reservierten Schließfaches elektronisch an den Teilnehmer übermittelt. Der Teilnehmer kann sich nun zu der mobilen Abholstation begeben, das Schloss durch die Eingabe des Codes entriegeln, wobei diese Entriegelung des elektronischen Schlosses automatisch, z. B. elektromotorisch erfolgt, und er kann anschließend seine Kleinsendung in das Schließfach einlagern und die Tür des Schließfaches wieder schließen. Anschließend wird das Schloss, nachdem die Tür des Schließfaches geöffnet und anschließend wieder geschlossen worden ist, automatisch verriegelt und der Code, der dieses Schloss entsperrt, wird automatisch gesperrt oder zumindest geändert, nachdem die Tür des Schließfaches geöffnet worden ist.

Der Teilnehmer an dem Verfahren ist in diesem Fall also nicht der Empfänger einer Kleinsendung, sondern vielmehr der Absender einer Kleinsendung, der aber auch in diesem Fall unterschieden wird von den sogenannten Betreibern, nämlich den Logistikdienstleistern. Wenn die mobile Abholstation später mittels des Zugfahrzeugs vom Aufstellungsort wieder zum Logistikzentrum gebracht wird, kann von dort der weitere Versand der Kleinsendung erfolgen.

Wenn jedoch die Versandkosten der Kleinsendung noch nicht bekannt sind, wenn der Teilnehmer seine Kleinsendung in der mobilen Abholstation ablegt, kann vorgesehen sein, dass im Logistikzentrum diese Kosten berechnet werden, nachdem die mobile Abholstation vom Aufstellungsort zum Logistikzentrum verbracht worden ist. Anhand dieser Berechnung können dem Teilnehmer jetzt die Versandkosten als Zahlungsinformation elektronisch übermittelt werden, so dass dieser nun wie oben beschrieben die Zahlung leisten kann. Falls der Teilnehmer den Versand der Kleinsendung nun nicht mehr wünschen sollte, kann er die Zahlung ablehnen, so dass die Kleinsendung wieder zum Aufstellungsort verbracht wird, wenn die mobile Abholstation das nächste Mal zum Aufstellungsort gefahren wird, und so dass der Teilnehmer dann seine Kleinsendung wieder zurücknehmen kann und lediglich die für die bisherige Handhabung entstandenen Kosten entrichten muss.

Auch bei der Aufgabe eines Paketes in die mobile Abholstation wird der Code des Schließfaches automatisch ungültig, nachdem das Schließfach geöffnet worden ist. Dies kann in einer ersten Variante des Verfahrens unmittelbar nach Öffnung des Schließfaches erfolgen oder, in einer zweiten Variante, erst dann, wenn das zunächst geöffnete Schließfach anschließend wieder geschlossen worden ist.

Gegebenenfalls kann sogar vorgesehen sein, dass der Code erst nach einer vorbestimmten Zeit ungültig wird. Auf diese Weise kann die mobile Abholstation als "Paketstation" genutzt werden, wie dies beispielsweise in der Vorweihnachtszeit in vielen Städten bekannt ist. Wie bei einer Schließfachanlage kann der Teilnehmer, der das leere Schließfach mit einer Kleinsendung bestückt hat, während dieser vorbestimmten Zeit, während welcher der Code seine Gültigkeit behält, das Schließfach erneut öffnen und seine Kleinsendung aus dem Schließfach wieder entnehmen.

Auch besteht die Möglichkeit, dass ein Einzelhändler seine Ware über die äußere Tür in ein Fach der Schrankanlage einlagert, dem Kunden den Code dieses Faches mitteilt, und so dem Kunden die Abholung der Ware ermöglicht, ohne dass dieser die Geschäftsräume des Einzelhändlers aufsuchen muss. Insbesondere für Einzel- oder Kleinunternehmen, die aufgrund ihrer Personalstruktur tagsüber Schließzeiten ihrer Geschäftsräume einrichten müssen, ermöglicht dies eine problemlose Aushändigung der Ware auch während derartiger Schließzeiten.

Ggf. kann vorgesehen sein, dass der Anhänger ein Zahlungsmodul enthält, so das für den Empfänger die Möglichkeit besteht, eine im Anhänger für ihn bereitliegende Ware zu bezahlen, bevor ihm der Entsperr-Code des betreffenden Fachs mitgeteilt wird und ihm die Entnahme der nun bezahlten Ware ermöglicht wird. Vorteilhaft kann bei dem Zahlungsmoral vorgesehen sein, dass eine Bezahlung per Bargeld ausgeschlossen ist, um einen Anreiz für Vandalismus, beispielsweise durch Aufbrechen der Kasse, auszuschließen. Rein beispielhaft kann das erwähnte Zahlungsmodul ein Scheckkarten-Lesegerät enthalten oder über ein NFC-Modul (NFC= near field communication) die Bezahlung per entsprechend geeigneter Scheck- oder Kreditkarte bzw. Smartphone ermöglichen.

Es kann vorgesehen sein, telemetrisch mit Hilfe entsprechender Sensoren den jeweiligen Status der Fächer zum Versender, zum Empfänger und / oder zu einem Logistik-Dienstleister zu übermitteln. Eine Statusmeldung kann Informationen darüber enthalten, ob eine äußere Tür entriegelt oder verriegelt ist, ob sich ein Gegenstand innerhalb des Faches befindet oder nicht, ob eine Temperatur in dem Fach über- oder unterschritten wird bzw. welche Temperatur in dem Fach herrscht.

Zum Entsperren eines Schlosses kann ein Abgleich mit biometrischen Daten des berechtigten Empfängers vorgesehen sein. Beispielsweise kann der Anhänger ein Biometrie-Modul aufweisen, welches als Fingerabdruck- oder Iris-Scanner ausgestaltet ist. Der biometrische Abgleich kann zugunsten einer besonders einfachen Handhabung genutzt werden, so dass die biometrischen Daten einen Entsperr-Code darstellen, der die Öffnung einer äußeren Tür eines Faches ermöglicht, ohne dass der jeweilige Nutzer andere Eingabeliste eines Entsperr-Codes betätigen muss, beispielsweise eine Tastatur oder dergleichen. In besonderen Fällen, beispielsweise wenn die Übergabe von Gegenständen besonderer Wichtigkeit vorgesehen ist, kann der biometrische Abgleich ergänzend zu der Eingabe eines ansonsten ohnehin vorgesehenen Entsperr-Codes vorgesehen sein.

Um die biometrischen Daten, die mittels des Biometrie-Moduls eingelesen werden, mit Referenzdaten vergleichen zu können, können diese Referenzdaten dauerhaft in einer Datenbank abgelegt sein, die in einem dezentralen Speicher im Anhänger abgespeichert ist oder die in einem zentralen Speicher vorliegt, auf den vom Anhänger aus automatisch kabelgebunden oder drahtlos zugegriffen werden kann, z. B. mittels eines Programms, das auf einem im Anhänger angeordneten PC läuft. Eine dauerhafte Speicherung der biometrischen Daten kann für Anwender vorteilhaft sein, die regelmäßig unter Verwendung der biometrischen Daten auf ein Fach der Schrankanlage zugreifen.

Alternativ zu einer dauerhaften Speicherung können diese Referenzdaten lediglich kurzzeitig zwischengespeichert werden, beispielsweise aus Datenschutzgründen oder für Nutzer, die lediglich einmal oder gelegentlich unter Verwendung der biometrischen Daten auf ein Fach der Schrankanlage zugreifen. Die kurzzeitige Zwischenspeicherung erfolgt vorteilhaft lokal bzw. dezentral im Anhänger. Beispielsweise können die biometrischen Referenzdaten über eine Mobilfunkverbindung in den Zwischenspeicher übermittelt werden. Die Löschung dieser zwischengespeicherten Referenzdaten kann automatisch erfolgen, nachdem diese für einen Abgleich verwendet worden sind, also nach einem Zugriff auf das betreffende Fach der Schrankanlage, oder nach Ablauf einer vorgegebenen Speicherungs-Zeitdauer, oder je nachdem, welches der beiden genannten Ereignisse zuerst eintritt.

Wenn vorgesehen ist, dass die Kleinsendung zum Logistikzentrum verbracht werden soll und von dort weiter versendet werden soll, kann der Code, nachdem der Teilnehmer seine Kleinsendung in das Schließfach eingebracht hat, auch dadurch ungültig werden, dass dem Schloss nicht etwa automatisch eine neue Codierung zugewiesen wird, sondern dass vielmehr diesem Schloss eine elektronische Information übermittelt wird, die das Schloss in einen gesperrten Modus versetzt, sodass unabhängig von dem am Schloss eingegebenen Code das Schloss in seiner Riegelstellung verbleibt. Auf diese Weise wird zuverlässig eine versehentliche Öffnung des Schließfaches durch Unbefugte von außen vermieden, während der Zugang von innen, beispielsweise von dem erwähnten Gang her, nach wie vor problemlos möglich ist, um die zum Versand aufgegebene Sendung im Logistikzentrum weiter bearbeiten zu können.

Ob die Kleinsendung zum Versand aufgegeben werden soll oder das Schließfach nur für eine bestimmte Zeit wie bei einer Paketstation angemietet werden soll, kann der Teilnehmer im Rahmen seiner Bedarfsanfrage dem Betreiber des Logistikkonzepts mitteilen.

Das grundsätzliche Verfahren, welches unter Verwendung der vorschlagsgemäßen mobilen Abholstation zur Übergabe von Briefen, Paketen und ähnlichen Kleinsendungen durchgeführt werden kann, sieht daher vor, dass in einem Logistikzentrum eine Kleinsendung in einem Schließfach der Schrankanlage abgelegt wird. Anschließend wird der Anhänger an ein Zugfahrzeug angekoppelt und mittels dieses Zugfahrzeugs zu einem Aufstellungsort gebracht, dort vom Zugfahrzeug entkoppelt und aufgestellt. Der Code des zu dem Schließfach gehörenden Schlosses wird elektronisch an den vorgesehenen Empfänger der Kleinsendung übermittelt, der als Teilnehmer dieses Logistikkonzepts bezeichnet und auf diese Weise von den Betreibern, nämlich den Logistik-Dienstleistern, unterschieden wird. Nach Eingabe des Codes wird das Schloss automatisch entriegelt, sodass der Teilnehmer auf diese Weise Zugriff auf das Schließfach und die darin befindliche Kleinsendung erhält.

Die Möglichkeit, dass nicht nur ein Betreiber im Logistikzentrum, sondern vielmehr auch ein Teilnehmer am Aufstellungsort eine Kleinsendung in einem Schließfach der mobilen Abholstation ablegen kann, stellt eine Weiterentwicklung dieses grundsätzlichen Verfahrens dar. Denn auch wenn bei dem Empfang einer Kleinsendung und der Abgabe einer Kleinsendung die beiden Teilnehmer und auch die beiden Kleinsendungen verschieden sein können, dient die mobile Abholstation doch in beiden Fällen zur Übergabe einer Kleinsendung im Rahmen des Logistikkonzepts, wobei lediglich die Übergabe in verschiedenen Richtungen erfolgt.

Der vorschlagsgemäße Anhänger kann vorteilhaft ein Staufach aufweisen, welches zur Unterbringung von elektronischen Einrichtungen dient. Beispielsweise kann darin eine elektronische Steuerung untergebracht werden, z.B. in Form eines PCs, ein Funkmodul für eine externe Funkverbindung, ein Funkmodul für eine auf den Bereich der Abholstation beschränkte WLAN-Funkverbindung, eine GPS-Antenne und dergleichen. Anhand der Positionsbestimmung, die mittels der GPS-Antenne möglich ist, kann der Standort der Abholstation durch eine Funkabfrage abgerufen werden, oder es kann vorgesehen sein, dass in regelmäßigen Abständen durch das Funkmodul der Abholstation selbst der jeweilige Standort ausgesendet wird, was einerseits die Arbeit der Logistik-Dienstleister erleichtert und andererseits dem Diebstahlschutz dienen kann. Vorteilhaft kann ein solches Staufach dadurch geschaffen werden, dass an einer Stirnseite des Anhängers, wo sich die Deichsel befindet, ein Staufach zur Aufnahme der nach oben geklappten Deichsel so groß bemessen wird, dass darin auch elektronischen Einrichtungen untergebracht werden können.

Das Staufach, beispielsweise das erwähnte Staufach für die Deichsel, kann auch Anschlüsse für eine elektrische Energieversorgung aufweisen und / oder Anschlüsse an einen Kreislauf eines flüssigen Wärmeträgers. Wenn in der Abholstation einige Schließfächer als Kühlfächer oder Warmhaltefächer ausgestaltet sind und dementsprechend temperiert werden müssen, kann mittels derartiger Anschlüsse im Logistikzentrum das betreffende Schließfach auf die gewünschte Temperatur gebracht werden. Dazu können die Anschlüsse beispielsweise mit einer im Logistikzentrum vorhandenen, stationären Energieversorgung bzw. Temperiereinrichtung verbunden werden, oder bereits im Logistikzentrum an eine Energieversorgung oder einen Wärmeträgerkreislauf des Zugfahrzeugs angeschlossen werden. Bevor der Anhänger im Logistikzentrum von der stationären Einrichtung entkoppelt wird, und spätestens wenn am Aufstellungsort der Anhänger von dem Zugfahrzeug entkoppelt wird, werden diese Anschlüsse gelöst und sind, wenn die Klappe des entsprechenden Staufaches verschlossen ist, gegen unbefugten Zugriff gesichert.

In einem Staufach des Anhängers, beispielsweise in dem erwähnten Staufach zur Aufnahme der Deichsel, können auch Kleinwerkzeuge untergebracht werden, beispielsweise Hand betätigte oder auch motorisch betätigte Kleinwerkzeugen wie z.B. ein Akkuschrauber, ein Kleinkompressor oder dergleichen. Die Kleinwerkzeuge können dazu vorgesehen sein, kleinere Instandhaltungsreparaturen am Anhänger unmittelbar an Ort und Stelle durchzuführen, so dass der Anhänger fahrbereit ist und in das Logistikzentrum oder zu einer Servicestation gebracht werden kann. Die Kleinwerkzeuge können aber auch für den regulären Betrieb des Anhängers vorgesehen sein: beispielsweise kann eine mechanische Höhenverstellung des Anhängers mithilfe von Spindeltrieben vorgesehen sein, und für deren Antrieb kann der erwähnte Akkuschrauber genutzt werden.

Die einzelnen Schließfächer der Abholstation können vorteilhaft innen im Anhänger, wo sich beispielsweise ein Gang zwischen den Schließfächern befindet, durch gewichtssparende Verschlussgitter gesichert sein, um einen unbefugten Zugriff von außen, nämlich durch ein geöffnetes Schließfach hindurch, auf ein anderes Schließfach zu verhindern.

Die Abholstation verfügt vorteilhaft über einen Energiespeicher, der nicht nur zum Betrieb der elektronischen Einrichtungen ausreichend bemessen ist, sondern der auch nach Abkopplung des Anhängers vom Zugfahrzeug eine Höhenverstellung des Anhängers ermöglicht, beispielsweise um den Anhänger abzusenken und so einen leichteren Zugang zu den Schließfächern, insbesondere den oberen Schließfächern, zu schaffen. Je nach Ausgestaltung der Schließfächer kann der Energiespeicher auch dazu genutzt werden, die Schließfächer zu temperierten, wenn diese beispielsweise als Kühlfächer oder Warmhaltefächer ausgestaltet sind.

Vorteilhaft kann die Abholstation Mittel zur Energieerzeugung aufweisen, beispielsweise in Form eines Fotovoltaik-Moduls und / oder in Form eines Windgenerators, z.B. in Form eines Vertikalrotors. Durch derartige Mittel kann die Energieversorgung aus dem Energiespeicher auf eine längere Nutzungsdauer gestreckt werden bzw. der Energiespeicher dementsprechend kleiner bemessen werden.

Die Schließfächer weisen vorzugsweise unterschiedliche Größen in Abhängigkeit an die jeweils aufzunehmenden Kleinsendungen auf. Für längliche Sendungen kann vorteilhaft oberhalb der Schließfächer die Anordnung von sogenannten Langgutfächern vorgesehen sein. Wenn aufgrund der Achsanordnung die untere Reihe von Schließfächern oberhalb von der Achse des Anhängers bzw. oberhalb von Radkästen des Anhängers angeordnet ist, kann unterhalb dieser untersten Reihe von Schließfächern, nämlich vor und hinter den Radkästen die Anordnung von Langgutfächern vorgesehen sein.

Der vorliegende Vorschlag wird anhand der rein schematischen Darstellungen nachfolgend näher erläutert. Dabei zeigt
- Fig. 1: eine perspektivische Ansicht auf eine als Anhänger ausgestaltete mobile Abholstation samt Zugfahrzeug,
- Fig. 2: einen horizontalen Längsschnitt durch eine Schrankanlage der mobilen Abholstation von Fig. 1,
- Fig. 3: eine perspektivische Ansicht auf die Abholstation der Fig. 1 an ihrem Aufstellungsort,
- Fig. 4: eine schematische Skizze als Ansicht auf ein Logistikzentrum,
- Fig. 5: eine schematische Skizze auf ein in mehrere Zustellbereiche aufgeteiltes Stadtgebiet,
- Fig. 6: eine seitliche Ansicht auf eine fahrbereite mobile Abholstation, mit teilweise weggebrochenen Wänden,
- Fig. 7: eine frontale Ansicht auf die Tür eines Schließfachs,
- Fig. 8: die Abholstation von Fig. 6 an ihrem Aufstellungsort,
- Fig. 9: eine erste Stirnseite der Abholstation von Fig. 6 mit einer Deichsel in Ruhestellung,
- Fig. 10: eine Ansicht ähnlich Fig. 8, mit der Deichsel in Ruhestellung, und
- Fig. 11: eine zweite Stirnseite der Abholstation von Fig. 6.

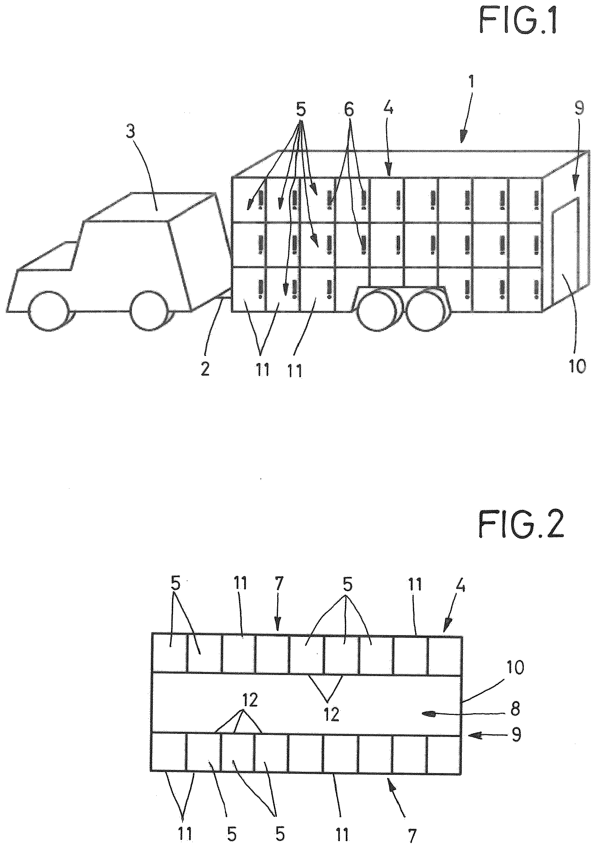

In Fig. 1 ist eine mobile Abholstation dargestellt, die als Fahrzeuganhänger 1 ausgestaltet ist. Der Anhänger 1 ist mittels einer schematisch angedeuteten Deichsel 2 an ein Zugfahrzeug 3 mit Elektroantrieb angekoppelt und weist eine Schrankanlage 4 auf, die eine Vielzahl von Schließfächern 5 umfasst. Die Schließfächer 5 sind bei dem dargestellten, rein schematischen Ausführungsbeispiel in drei Etagen übereinander angeordnet und sind von außen zugänglich. Hierzu weisen sie jeweils eine äußere Tür 11 auf, wobei jede Tür 11 mittels eines eigenen, schematisch angedeuteten Schlosses 6, welches je nach Ausgestaltung auch als Griff dienen kann, bedienbar und verriegelbar ist. Die Schlösser 6 sind individuell codiert, so dass mittels eines Zugangscodes stets nur ein bestimmtes Schloss 6 geöffnet und der Zugang durch die betreffende äußere Tür 11 nur zu einem bestimmten Schließfach 5 freigegeben werden kann.

Fig. 2 zeigt einen horizontalen Schnitt durch die Schrankanlage 4 der mobilen Abholstation von Fig. 1. Die Schließfächer 5 sind in zwei Reihen angeordnet, jeweils außen an einer Längsseite 7 des Anhängers 1. Ein Gang 8 verläuft als Freiraum zwischen diesen beiden Reihen von Schließfächern 5. Zusätzlich zu ihren äußeren, durch die Schlösser 6 gesicherten Türen 11 weisen die Schließfächer 5 auch sogenannte innere Türen 12 auf, die vom Gang 8 her einen Zugriff in die Schließfächer 5 ermöglichen. Eine auch in Fig. 1 erkennbare Anhängertür 10 ist in einer hinteren Stirnseite 9 des Anhängers 1 angeordnet

Die inneren Türen der Schließfächer 5 weisen keine individuell codierten Schlösser auf. Sie können vielmehr mit einem Generalschlüssel geöffnet werden, der die Öffnung sämtlicher innerer Türen ermöglicht, oder sie können ohne Schloss ausgestaltet sein und lediglich mechanische Riegelmittel aufweisen, die dazu dienen, eine versehentliche Öffnung der inneren Tür zu verhindern, z.B. wenn der Anhänger 1 beim Überfahren von Bodenunebenheiten stoßartige Bewegungen ausführt.

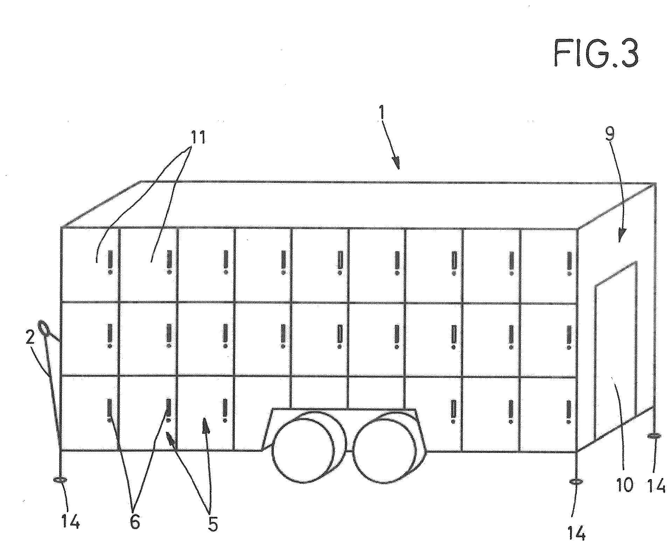

Während Fig. 1 die mobile Abholstation im fahrbereiten Zustand zeigt, ist der Anhänger 1 in Fig. 3 an seinem Aufstellort dargestellt, also dort, wo die mobile Abholstation den Zugriff der jeweiligen Empfänger auf die Schließfächer 5 ermöglichen soll. Die Deichsel 2 ist aus ihrer liegenden Fahrstellung nach oben geschwenkt worden und befindet sich in einer aufrechten Ruhestellung, so dass der Platzbedarf des Anhängers 1 am Aufstellungsort minimiert ist. Weiterhin steht der Anhänger 1 mit Bodenstützen 14 auf dem Untergrund auf.

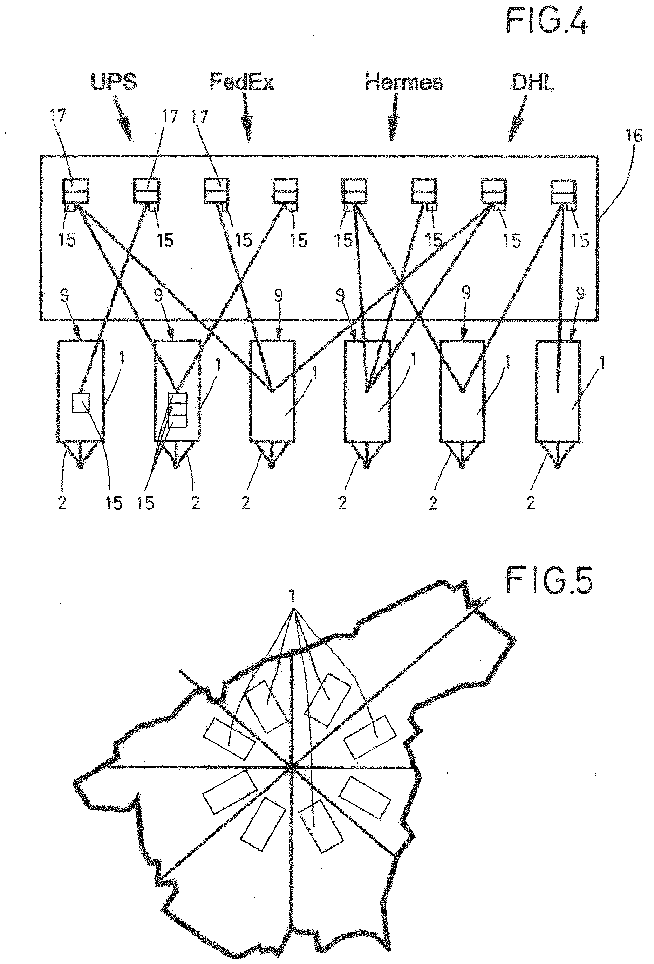

Fig. 4 erläutert schematisch die Beschickung mehrerer Anhänger 1 mit Kleinsendungen 15 in Form von Paketen im Bereich eines Logistikzentrums 16. Das Logistikzentrum 16 stellt ein Gebäude dar, welches mehrere Laderampen aufweist, wobei an jeder Laderampe ein Anhänger 1 steht. Dabei grenzt jeweils eine hintere Stirnseite 9, die der Deichsel 2 gegenüberliegt, an die Laderampe an, so dass von der Laderampe aus durch die Anhängertür 10 der Gang 8 eines Anhängers 1 betreten werden kann und vom Gang 8 aus die Schließfächer 5 dieses Anhängers 1 durch ihre inneren Türen 12 mit den Kleinsendungen bestückt werden können.

Verschiedene Speditionsunternehmen liefern ihre Kleinsendungen in das Logistikzentrum 16. Rein beispielhaft sind als Speditionsunternehmen die aus der Praxis bekannten Unternehmen UPS, FedEx, Hermes und DHL in Fig. 4 genannt. An Umschlagplätzen 17 werden die von den Speditionsunternehmen angelieferten Kleinsendungen den verschiedenen Anhängern 1 zugeordnet. Dies geschieht in Abhängigkeit davon, welcher Anhänger 1 für einen Aufstellungsort in dem Zustellbereich des jeweiligen Empfängers bestimmt ist.

Fig. 5 zeigt in Art einer Landkarten-Darstellung die Umrisse eines Stadtgebiets, wobei dieses Stadtgebiet in acht Zustellbereiche und rein schematisch in jedem dieser Zustellbereiche ein Anhänger 1 dargestellt ist, der sich an einem Aufstellungsort in seinem jeweiligen Zustellbereich befindet.

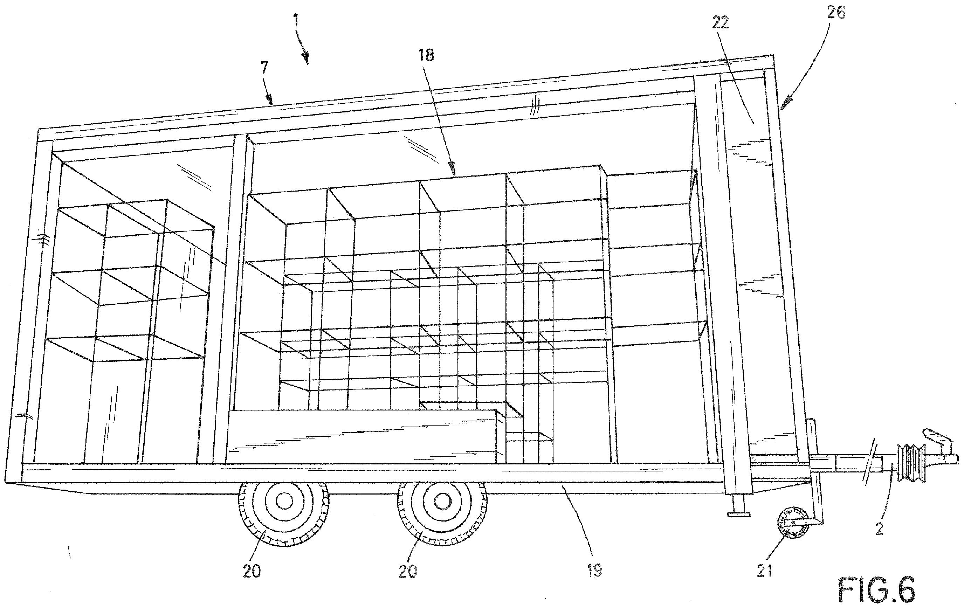

Fig. 6 zeigt eine Ansicht auf eine Längsseite 7 eines Anhängers 1. Eine Seitenwand des Anhängers ist entfernt und ein Regalgerüst 18 der Schrankanlage 4 ist erkennbar. Das Regalgerüst 18 kann mit einer Vielzahl von Platten ausgefacht werden, um die Schließfächer 5 zu schaffen. Dabei sind feste Platten als Böden, Decken und Wände der Schließfächer 5 vorgesehen, sowie bewegliche Platten, welche die äußeren Türen 11 und die inneren Türen 12 der Schließfächer 5 bilden.

Weiterhin ist in Fig. 6 ein Fahrzeugrahmen 19 des Anhängers 1 erkennbar, welcher Laufräder 20 trägt, und an den auch die Deichsel 2 anschließt, die ihrerseits ein Stützrad 21 trägt. An der Stirnseite 26 des Anhängers 1, welche der Stirnseite 9 gegenüberliegt und wo die Deichsel 2 vorgesehen ist, ist zwischen der äußeren Stirnwand des Anhängers 1 und den nächst benachbarten Schließfächern 5 des Regalgerüstes 8 ein Stauraum 22 angeordnet. Der Stauraum 22 kann beispielsweise genutzt werden, um Batterien oder ähnliche Energiespeicher unterzubringen, die beispielsweise die Schlösser 6 mit Energie versorgen, wenn die Schlösser 6 als elektronische Schlösser ausgestaltet sind.

Weiterhin kann in dem Stauraum 22 eine Recheneinheit untergebracht werden, die ebenfalls von dieser Energiequelle mit Energie versorgt wird und die beispielsweise dazu dient, nach einem berechtigten Zugriff auf ein Schließfach 5 das Schloss 6 dieses Schließfaches 5 zu sperren bzw. dessen Code zu ändern.

Weiterhin kann in dem Stauraum 22 eine Mobilfunkeinrichtung untergebracht werden, die ebenfalls von dieser Energiequelle mit Energie versorgt wird und die dazu dient, eine Kommunikation mit einer Zentralstelle zu ermöglichen, beispielsweise um die Kodierung elektronischer Schlösser 6 zu ändern. Die Kommunikation mit der Zentralstelle kann dazu dienen, die Öffnung einer äußeren Tür 11 eines Schließfaches 5 an die Zentralstelle zu übermitteln, so dass in der Zentralstelle eine Information vorliegt, dass das betreffende Schließfach 5 vermutlich geleert worden ist. Die Kommunikation mit der Zentralstelle kann zudem dazu dienen, nach einer berechtigten Öffnung eines Schließfaches 5 eine neue, zentral bestimmte, geänderte Kodierung für dieses Schließfach 5 von der Zentralstelle zum Anhänger 1 zu übermitteln. Alternativ kann vorgesehen sein, dass die neue Kodierung mittels einer Recheneinheit des Anhängers 1 dezentral bestimmt und geändert wird, und dass dieser geänderte Code anschließend an die Zentralstelle übermittelt wird.

Dementsprechend kann ein Teilnehmer - beispielsweise ein ortsfremder Teilnehmer - über die Zentralstelle ein leeres Schließfach 5 des Anhängers 1 anmieten und somit die mobile Abholstation als Paketstation nutzen, um während eines Aufenthalts in der Stadt eingekaufte Waren zeitweilig in einem Schließfach 5 zwischenzulagern, bevor dieser Teilnehmer selbst anschließend diese Waren wieder aus dem Schließfach 5 entnimmt und die Waren selbst zu seinem Heimatort transportiert.

Oder ein Teilnehmer kann über die Zentralstelle ein leeres Schließfach 5 anmieten und mitsamt einer Speditionsdienstleistung bezahlen, so dass dieser Teilnehmer anschließend eine zu versendende Kleinsendung 15 in das leere Schließfach 5 einlegen kann. Wenn später der Anhänger 1 von seinem Aufstellungsort abgeholt und mittels eines Zugfahrzeugs 3 wieder zum Logistikzentrum 16 gebracht wird, kann dort die Kleinsendung aus dem Schließfach 5 entnommen und durch ein Speditionsunternehmen weiter behandelt und bis zu dem vorgesehenen Empfänger gebracht werden.

Bei einer entsprechenden Ausgestaltung einer im Anhänger 1 untergebrachten Recheneinheit kann auf die Kommunikation mit einer Zentralstelle verzichtet werden. In diesem Fall kann ebenfalls eine Mobilfunkeinheit im Anhänger 1 vorgesehen sein, die jedoch zur Kommunikation mit dem Teilnehmer selbst dient und ggf. auch mit Bezahldiensten, über welche die von dem Teilnehmer zu entrichtende Gebühr abgerechnet wird.

Fig. 6 zeigt den Anhänger 1 in einem grundsätzlich fahrbereiten Zustand. Der Anhänger 1 muss lediglich an ein Zugfahrzeug 3 angekoppelt werden und das Stützrad 21 muss angehoben bzw. entfernt werden, um anschließend den Anhänger 1 verfahren zu können, beispielsweise um ihn zwischen dem Logistikzentrum 16 und dem Aufstellungsort hin und her verbringen zu können.

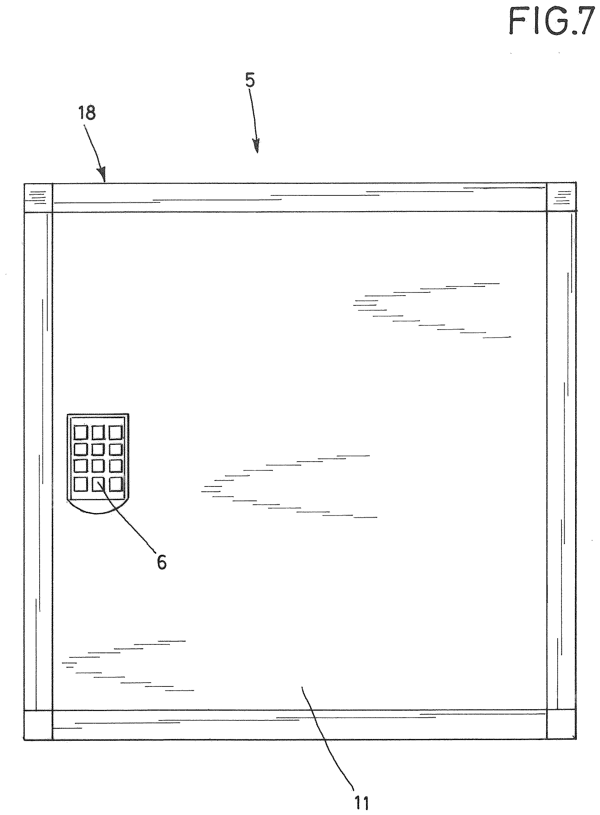

Fig. 7 zeigt einen Ausschnitt aus dem Regalgerüst 18, nämlich den Ausschnitt eines einzelnen Schließfaches 5. Dabei ist die äußere Tür 11 zwischen den Streben des Regalgerüstes 18 erkennbar. Die äußere Tür 11 weist ein elektronisches Schloss 6 auf, welches gleichzeitig auch als Türgriff dient, und welches über eine Tastatur mit einem Ziffernblock verfügt, so dass ein als PIN bezeichneter Zahlencode eingegeben werden kann, um das Schloss 6 entsperren und anschließend die Tür 11 öffnen zu können.

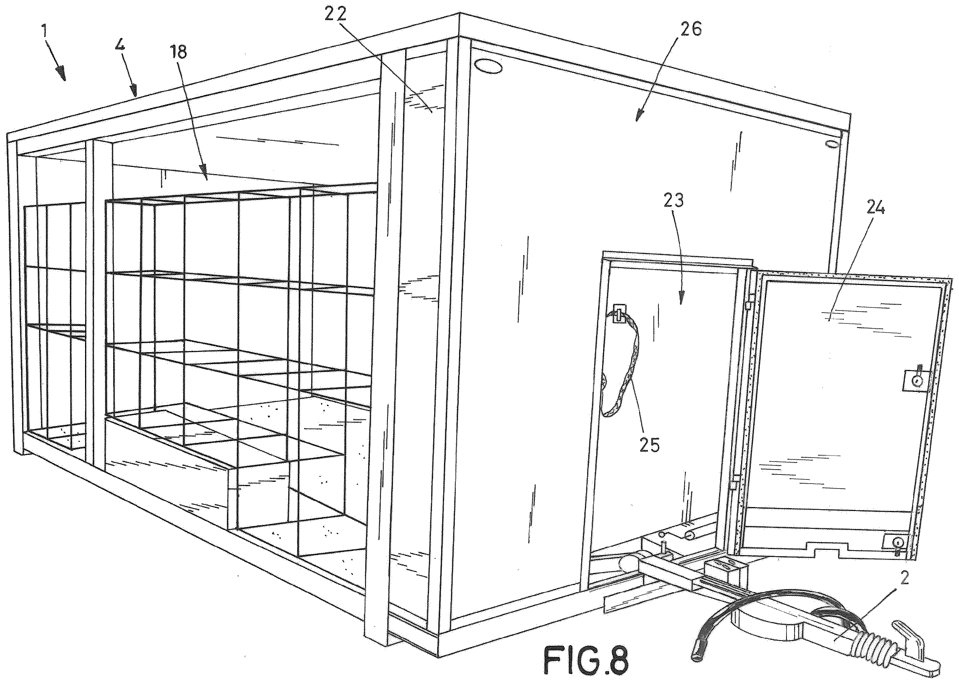

Fig. 8 zeigt eine perspektivische Ansicht auf den Anhänger 1 der Fig. 6 vom Bereich der Stirnseite 9 her. Dabei ist ersichtlich, dass im Stauraum 22 ein Staufach 23 durch eine Staufachtür 24 zugänglich ist. Die Staufachtür 24 ist in Fig. 8 in ihrer Offenstellung dargestellt, so dass ein Fangband 25 in dem Staufach 23 ersichtlich ist.

Weiterhin ist aus Fig. 8 erkennbar, dass das Stützrad 21 von der Deichsel 2 demontiert ist und die Schrankanlage 4 gegenüber dem Fahrzeugrahmen 19 und den Laufrädern 20 abgesenkt worden ist. Die Schrankanlage 4 steht mit Bodenstützen 14 auf dem Untergrund auf. Diese Anordnung des Anhängers 1 ist dann vorgesehen, wenn er sich am Aufstellungsort befindet und die Schrankanlage 4 nun in eine Zugangsstellung gebracht wird, in welcher die Schließfächer 5 in einer geringeren Höhe angeordnet sind als in der aus Fig. 6 ersichtlichen Fahrstellung der Schrankanlage 4.

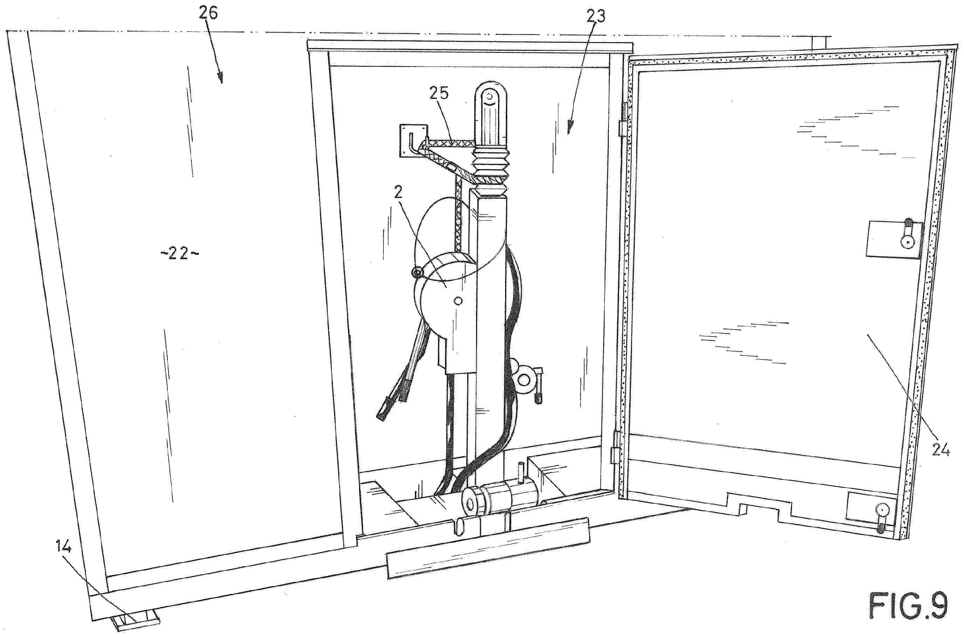

Fig. 9 zeigt ebenfalls die Schrankanlage 4 in ihrer abgesenkten Zugangsstellung. Im Unterschied zu Fig. 8 ist die Deichsel 2 aus ihrer liegenden Fahrstellung nach oben in eine aufrechte Ruhestellung geschwenkt worden, so dass sie nun vollständig im Staufach 23 angeordnet ist. In dieser Ruhestellung ist sie durch das Fangband 25 gesichert.

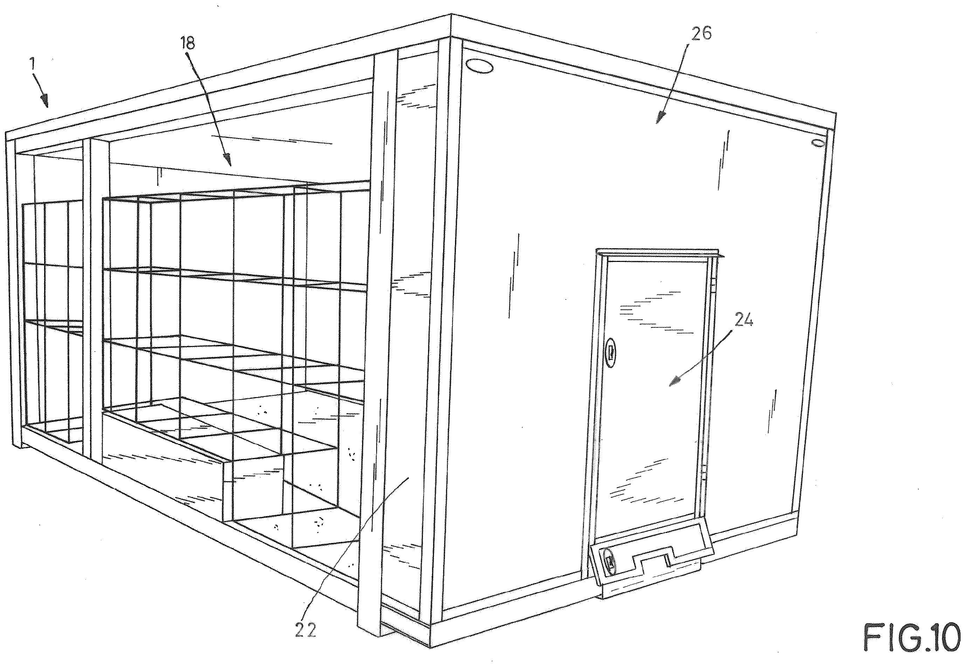

Wenn die Staufachtür 24 geschlossen wird, bietet der gesamte Stauraum 22 einschließlich des Staufachs 23 und der darin untergebrachten Deichsel 2 eine glatte äußere Oberfläche ohne hinderliche Überstände. Dies ist in Fig. 10 erkennbar.

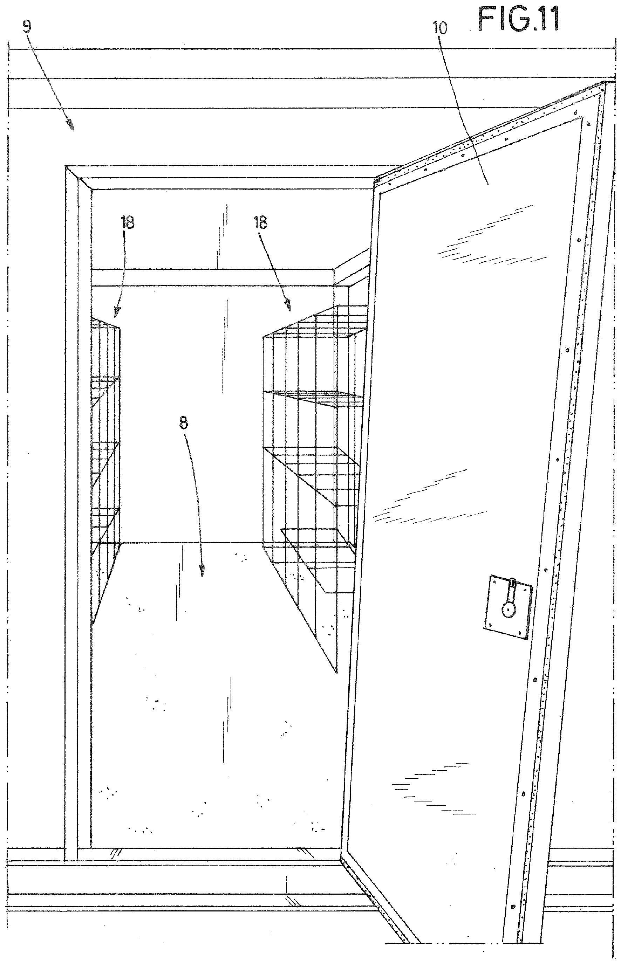

Fig. 11 zeigt eine Ansicht auf die vordere Stirnwand 9 mit geöffneter Anhängertür 10. Es ist ersichtlich, dass beiderseits des Ganges 8 Regalgerüste 18 zur Schaffung von Schließfächern 5 angeordnet sind.

### Bezugszeichen:

- 1: Anhänger
- 2: Deichsel
- 3: Zugfahrzeug
- 4: Schrankanlage
- 5: Schließfach
- 6: Schloss
- 7: Längsseite
- 8: Gang
- 9: Hintere Stirnseite (Anhängertür)
- 10: Anhängertür
- 11: Äußere Tür
- 12: Innere Tür
- 14: Bodenstützen
- 15: Kleinsendung
- 16: Logistikzentrum
- 17: Umschlagplatz
- 18: Regalgerüst
- 19: Fahrzeugrahmen
- 20: Laufräder
- 21: Stützrad
- 22: Stauraum
- 23: Staufach
- 24: Staufachtür
- 25: Fangband
- 26: Vordere Stirnseite (Deichsel)

## Patentansprüche

1. Mobile Abholstation für die Innenstadt-Logistik,
mit einem Fahrzeug,
und einer als Teil des Fahrzeugs ausgestalteten Schrankanlage (4),
wobei die Schrankanlage (4) eine Vielzahl von Schließfächern (5) aufweist,
und jedes Schließfach (5) ein individuell kodiertes Schloss (6) aufweist,
wobei das Fahrzeug als Anhänger (1) ausgestaltet ist, mit einer Deichsel (2), die aus einer Fahrstellung im Wesentlichen liegend ausgerichtet ist und sich von der Schrankanlage (4) weg nach außen erstreckt, in eine aufrechte Ruhestellung schwenkbar ist, in welcher sie sich weniger weit von der Schrankanlage (4) nach außen erstreckt, **dadurch gekennzeichnet,**
**dass** die Schrankanlage (4) ein Staufach (23) aufweist, welches die Deichsel (2) in ihrer Ruhestellung aufnimmt und dass die Schrankanlage (4) zwischen einer Fahrstellung und einer Zugangsstellung höhenbeweglich ist, wobei sie in der Zugangsstellung tiefer angeordnet ist als in der Fahrstellung,
und **dass** die Schrankanlage (4) relativ zu einem Fahrzeugrahmen (19) des Anhängers (1) höhenbeweglich ist.

2. Mobile Abholstation nach Anspruch 1, **dadurch gekennzeichnet,**
**dass** der Anhänger (1) einen Aufbau mit einem im Wesentlichen rechteckigen Grundriss aufweist,
wobei auf zwei gegenüberliegenden Seiten, die als Längsseiten (7) bezeichnet sind, von außen zugängliche Schließfächer (5) angeordnet sind,
und auch die Schlösser (6) der Schließfächer (5) von außen zugänglich sind,
und wobei im Inneren des Aufbaus ein freier Gang (8) zwischen diesen beidseitigen Schließfächern (5) verläuft, und die Schließfächer (5) auch von dem Gang (8) aus zugänglich sind,
und wobei in einer die beiden Längsseiten (7) verbindenden sogenannten Stirnseite (9) eine Anhängertür (10) angeordnet ist, durch welche der Gang (8) zugänglich ist, und wobei eine die beiden Längsseiten (7) verbindende sogenannte Stirnseite (26) eine Halterung für die Deichsel (2) aufweist.

3. Mobile Abholstation nach Anspruch 2,
**dadurch gekennzeichnet,**
**dass** die Halterung als die Deichsel (2) aufnehmendes Staufach (23) ausgestaltet ist.

4. Mobile Abholstation nach Anspruch 2 oder 3,
**dadurch gekennzeichnet,**
**dass** zwei einander gegenüberliegende Stirnseiten (9, 26) einerseits die Anhängertür (10) und andererseits die Halterung aufweisen.

5. Mobile Abholstation nach einem der vorhergehenden Ansprüche,
**dadurch gekennzeichnet,**
**dass** dem Anhänger (1) ein Zugfahrzeug (3) zugeordnet ist, welches mittels eines Elektromotors angetrieben ist.

6. Mobile Abholstation nach einem der vorhergehenden Ansprüche,
**dadurch gekennzeichnet,**
**dass** ein Schloss (6) eines Schließfaches (5) als PIN-Code-Schloss ausgestaltet ist.

7. Mobile Abholstation nach einem der vorhergehenden Ansprüche,
**dadurch gekennzeichnet,**
**dass** ein Schloss (6) eines Schließfaches (5) als elektronisches Schloss ausgestaltet ist, dessen Kodierung mittels elektronischer Signale veränderlich ist,
und **dass** diesem Schließfach (5) eine Funkeinrichtung zugeordnet ist,
welche eine Übermittlung des Codes zu einer Zentrale ermöglichend ausgestaltet ist.

8. Verfahren zur Übergabe von Briefen, Paketen und ähnlichen Kleinsendungen (15)
unter Verwendung einer mobilen Abholstation nach einem der vorhergehenden Ansprüche,
**dadurch gekennzeichnet,**
**dass**
• in einem Logistikzentrum (16) eine Kleinsendung (15) in einem Schließfach (5) der Schrankanlage (4) der mobilen Abholstation abgelegt wird,
• der die Schrankanlage (4) aufweisende Anhänger (1) an ein Zugfahrzeug (3) angekoppelt wird, mittels des Zugfahrzeugs (3) zu einem sogenannten Aufstellungsort verbracht und dort vom Zugfahrzeug (3) entkoppelt wird,
• wobei der Code des zu dem Schließfach (5) gehörigen Schlosses (6) elektronisch an einen als Teilnehmer bezeichneten Empfänger der Kleinsendung (15) übermittelt wird,
• und das Schloss (6) nach Eingabe des Codes automatisch entriegelt wird.

9. Verfahren nach Anspruch 8,
**dadurch gekennzeichnet,**
**dass**
• elektronisch eine Bedarfsanfrage von einem als Teilnehmer bezeichneten Absender einer Kleinsendung (15) an den Betreiber der Abholstation übermittelt wird,
• dem Teilnehmer elektronisch eine Bestätigungsmitteilung und eine Zahlungsinformation übermittelt wird
• ein das Schloss (6) eines leeren Schließfaches (5) der Schrankanlage (4) entsperrender Code elektronisch an den Teilnehmer übermittelt wird
• das Schloss (6) nach Eingabe des Codes automatisch entriegelt wird,
• und das Schloss (6), nachdem die Tür (11) des Schließfaches (5) geöffnet und anschließend wieder geschlossen worden ist, automatisch verriegelt wird
• und der dieses Schloss (6) entsperrende Code, nachdem die Tür (11) des Schließfaches (5) geöffnet worden ist, automatisch gesperrt oder geändert wird.

## Claims

1. Mobile pick-up station for inner city logistics,
having a means of transport and a set of lockers (4) that is designed as part of the means of transport, where the set of lockers (4) incorporates a plurality of lockers (5) and each locker (5) incorporates an individually coded lock (6), where the means of transport is designed as a trailer (1), having a tow bar (2) that is essentially aligned horizontally and extends outwards away from the set of lockers (4) and can be swung from a travelling position into an upright position in which it extends less far outwards from the set of lockers (4), **characterised in that** the set of lockers (4) incorporates a socket (23) to receive the tow bar (2) in its rest position and that the set of lockers (4) can be moved vertically between a travelling position and an access position, where in the access position the set of lockers (4) is disposed further down than in the travelling position, and that the set of lockers (4) can be moved vertically relative to a base frame (19) of the trailer (1).

2. Mobile pick-up station in accordance with claim 1, **characterised in that** the trailer (1) is constructed with an essentially rectangular horizontal layout, where on two opposing sides that are referred to as longitudinal sides (7) lockers (5) that are accessible from outside are arranged and also the locks (6) of the lockers (5) are accessible from outside and where in the interior of the structure a free access way (8) extends between these lockers (5) arranged on both sides and the lockers (5) can also be accessed from the access way (8) and where in a so-called front end (9) that links the two longitudinal sides (7) a trailer door (10) is disposed through which the access way (8) can be accessed and where a so-called front end (26) that links the two longitudinal sides (7) incorporates a holder for the tow bar (2).

3. Mobile pick-up station in accordance with claim 2, **characterised in that** the holder is designed as a socket (23) to receive the tow bar (2).

4. Mobile pick-up station in accordance with claim 2 or 3, **characterised in that** two front ends (9, 26) opposing each other incorporate at one end the trailer door (10) and at the other the holder.

5. Mobile pick-up station in accordance with any one of the foregoing claims, **characterised in that** a towing vehicle (3) that is driven by means of an electric motor is assigned to the trailer (1).

6. Mobile pick-up station in accordance with any one of the foregoing claims, **characterised in that** a lock (6) of a locker (5) is designed as a pin code lock.

7. Mobile pick-up station in accordance with any one of the foregoing claims, **characterised in that** a lock (6) of a locker (5) is designed as an electronic lock the coding of which can be changed by means of electronic signals and that radio equipment that is designed to enable the code to be transmitted to a central station is assigned to this locker (5).

8. Method of delivering letters, parcels and similar small consignments (15) using a mobile pick-up station in accordance with any one of the foregoing claims, **characterised in**
• **that** at a logistics centre (16) a small consignment (15) is placed in a locker (5) of the set of lockers (4) of the mobile pick-up station,
• **that** the trailer incorporating the set of lockers (4) is coupled to a towing vehicle (3), taken to a so-called parking site by means of the towing vehicle (3) and there decoupled from the towing vehicle (3),
• where the code for the lock (6) belonging to the locker (5) is transmitted electronically to a recipient of the small consignment (15) who is referred to as a subscriber,
• and where after entry of the code the lock (6) is unlocked electronically.

9. Method in accordance with claim 8, **characterised in that**
• a requirement request is sent electronically to the operator of the pick-up station by a sender of a small consignment (15) who is referred to as a subscriber,
• a confirmation message and payment information are sent electronically to the subscriber,
• a code to unlock the lock (6) of an empty locker (5) of the set of lockers (4) is sent electronically to the subscriber,
• after entry of the code the lock (6) is automatically unlocked
• and that, after the door (11) of the locker (5) has been opened and then shut again, the lock (6) is automatically locked
• and that, after the door (11) of the locker (5) has been opened, the code to unlock this lock (6) is automatically blocked or changed.

## Revendications

1. Station de retrait mobile pour la logistique de centre-ville,
comprenant un véhicule,
et un système de consignes (4) configuré comme faisant partie du véhicule sachant que le système de consignes (4) présente un grand nombre de consignes automatiques (5),
et que chaque consigne automatique (5) présente une serrure (6) à code individuel,
sachant que le véhicule est configuré comme une remorque (1) avec timon (2) qu'il est possible de faire pivoter, d'une position de remorquage orientée essentiellement à l'horizontale et s'étendant vers l'extérieur depuis le système de consignes (4), vers une position de repos redressée dans laquelle le timon s'étend moins loin du système de consignes (4),
**caractérisée en ce**
**que** le système de consignes (4) présente un compartiment de rangement (23) recevant le timon (2) lorsqu'en position de repos et en ce que le système de consignes (4) est déplaçable en hauteur entre une position de remorquage et une position d'accès,
sachant qu'en position d'accès il est disposé plus bas qu'en position de remorquage,
et en ce que le système de consignes (4) est déplaçable en hauteur relativement à un châssis véhicule (19) composant la remorque (1).

2. Station de retrait mobile selon la revendication 1, **caractérisée en ce que** la remorque (1) présente une carrosserie dont le plan d'ensemble est essentiellement rectangulaire,
sachant que, sur deux côtés se faisant face et appelés côtés longitudinaux (7), sont disposés des consignes automatiques (5) accessibles de l'extérieur, et que les serrures (6) des consignes automatiques (5) sont elles aussi accessibles de l'extérieur,
et sachant qu'à l'intérieur de la carrosserie se trouve un couloir dégagé (8) entre ces consignes automatiques (5) situées sur les deux côtés, et que les consignes automatiques (5) sont également accessibles depuis le couloir (8), et sachant que sur un côté dit frontal (9) reliant les deux côtés longitudinaux (7) est disposée une porte (10) de remorque donnant accès au couloir (8), et sachant qu'un côté dit frontal (26) reliant les deux côtés longitudinaux (7) présente une fixation pour le timon (2).

3. Station de retrait mobile selon la revendication 2, **caractérisée en ce que** la fixation est configurée en compartiment de rangement (23) recevant le timon (2).

4. Station de retrait mobile selon la revendication 2 ou 3, **caractérisée en ce que** deux côtés frontaux (9, 26) se faisant face présentent d'un côté la porte (10) de la remorque et de l'autre la fixation.

5. Station de retrait mobile selon l'une des revendications précédentes, **caractérisée en ce**
**qu'**à la remorque (1) est affecté un véhicule tracteur (3) propulsé par un moteur électrique.

6. Station de retrait mobile selon l'une des revendications précédentes, **caractérisée en ce**
**qu'**une serrure (6) d'une consigne automatique (5) est configurée en serrure à code secret.

7. Station de retrait mobile selon l'une des revendications précédentes, **caractérisée en ce**
**qu'**une serrure (6) d'une consigne automatique (5) est configurée en serrure électronique dont le codage est modifiable au moyen de signaux électroniques,
et en ce qu'un équipement radio est affecté à cette consigne automatique (5),
équipement qui est configuré de sorte à permettre une transmission du code à un central.

8. Procédé de remise de lettres, paquets et d'autres petits envois (15) utilisant une station de retrait mobile selon l'une des revendications précédentes, **caractérisé en ce**
• **que** dans un centre logistique (16) un petit envoi (15) est déposé dans une consigne automatique (5) du système de consignes (4) de la station de retrait mobile,
• **que** la remorque (1) présentant le système de consignes (4) est attelée à un véhicule tracteur (3), qu'elle est transférée vers un lieu dit d'implantation au moyen du véhicule tracteur (3) et qu'une fois là elle est dételée du véhicule tracteur (3),
• sachant que le code de la serrure (6) affectée à la consigne automatique (5) est transmise électroniquement à un destinataire, appelé abonné, du petit envoi (15),
• et **que** la serrure (6) est automatiquement déverrouillée après avoir entré le code.

9. Procédé selon la revendication 8, **caractérisé en ce**
• **que** par la voie électronique une demande de besoin est transmise d'un expéditeur, appelé abonné, d'un petit envoi (15), à l'exploitant de la station de retrait,
• **qu'**un message de confirmation et une information de paiement sont transmis électroniquement à l'abonné,
• **qu'**un code déverrouillant la serrure (6) d'une consigne automatique (5) vide du système de consignes (4) est transmis électroniquement à l'abonné
• **que** la serrure (6) est automatiquement déverrouillée après avoir entré le code,
• et **que** la serrure (6), après avoir ouvert la porte (11) de la consigne automatique (5) et après l'avoir ensuite refermée, est automatiquement verrouillée
• et **que** le code déverrouillant cette serrure (6) est automatiquement bloqué ou modifié après que la porte (11) de la consigne automatique (5) a été ouverte.
